# EUROPEAN PATENT SPECIFICATION

(11) **EP 1 011 994 B1**
(45) Date of publication and mention of the grant of the patent: **06.05.2004**
(21) Application number: 98928798.2
(22) Date of filing: 16.06.1998
(51) Int. Cl.: B60D 1/54, B60D 1/56

(54) **HITCHING MEANS FOR VEHICLES**
ANHÄNGEVORRICHTUNG FÜR FAHRZEUGE
DISPOSITIF D'ATTELAGE POUR VEHICULES

(30) Priority: 19.06.1997 SE 9702351
(43) Date of publication of application: 28.06.2000
(73) Proprietor: Volvo Personvagnar AB, 405 08 Göteborg (SE)
(72) Inventor: PILHALL, Stig, S-461 53 Trollhättan (SE)
(74) Representative: Hammond, Andrew David
(86) International application number: PCT/SE1998/001159
(87) International publication number: WO 1998/057813

(56) References cited:
- DE-A- 19 605 570
- DE-C- 2 619 912
- DE-C- 2 619 913
- DE-U- 9 109 699
- US-A- 2 849 243

## Description

The present invention concerns a hitching means for vehicles and of the type which compnses one pivotally at the buffer beam attached hitch ball, which is pivotable from one in the buffer retracted inoperative end position to a partly outside the buffer located extended operative end position (see, for instance, DE-U-91 09 699.5, corresponding to the preamble of claim 1).

### THE BACKGROUND OF THE INVENTION AND THE PROBLEM

Hitching means with a hitch ball, which can be totally retracted in the rear buffer is earlier known from, for instance, SE-C-390 143. These solutions arc however not adapted to the soft formed totally covered buffer cover of today. Most of the hitching means of today are still fixed or to a less extent removable.

A fixed hitch ball is aggressive against a colliding car and when backing. A fixed hitch ball is also in the way for access to the luggage compartment and can cause dirtying of trouser-leg and bruises on the small of the leg.

A removable hitch bail is a big, heavy and dirty object to handle and shall be kept in a safe way in the car in order to not cause damage at a collision.

### THE PURPOSE WITH THE INVENTION AND THE SOLUTION OF THE PROBLEM

The purpose with the invention is to achieve a hitch which
- has low weight, as an existing closed cross beam of the car body can be used,
- is so arranged that it gives the possible minimum stress on the attachment
- can be easily brought inside the buffer cover,
- is abolutely safe in extended position and, can take up draw load and forces directed upwards as well as braking force and forces directed downwards,
- can be made in a manual or motor-driven version.
- can be provided with an electric motor for operation of the hitch from the driving compartment.

According to the invention, these tasks have been solved by a hitching means as defined in claim 1. The hitch is channel-shaped, with a hitch ball arranged at a first branch end of the channel and with a pivot axle at its other branch end; the pivot axle is mounted essentally horizontally in tow attachments in the buffer beam, so that the middle part of the hitch in retracted position is located essentially vertically and in extended position essentially horizontally; a locking device is arranged for locking the hitch in its both end positions; the locking device comprises a locking part, which is connected with the hitch ball within a transition part between the second branch of the hitch and its middle part; said locking part is arranged to be conveyed by said transition part when the hitch rotates from the retracted inoperative end position to the extended operative end position and the locking part in the extended position of the hitch is in engagement with that locking device, so that occurring load and force stresses are taken up in said transition part.

Further features of the invention are disclosed in the dependent claims.

### DESCRIPTION OF THE DRAWINGS

The invention will in the following be more closely described in connection with an embodiment and with reference to the enclosed drawings
Figure 1 shows a section along the line I-I in figure 6 through a buffer with one in this built-in hitch in accordance with the invention and in extended position.
Figure 2 shows a view analogue to figure 1 with the hitch in retracted position.
Figure 3 shows one of the attachments at the buffer beam.
Figure 4 shows a section along the line IV-IV in figure 1 through the locking device of the hitch.
Figure 5 shows a section along the line V-V in figure 1.
Figure 6 shows in analogy with figure 1 a side view of one with the aid of an electric motor operable hitch in accordance with the invention.
Figure 7 shows a view analogue to figure 6 with the hitch in retracted position.
Figure 8 shows the hitch in accordance with figure 6 in a view from above.

### DESCRIPTION OF EMBODIMENTS OF THE INVENTION

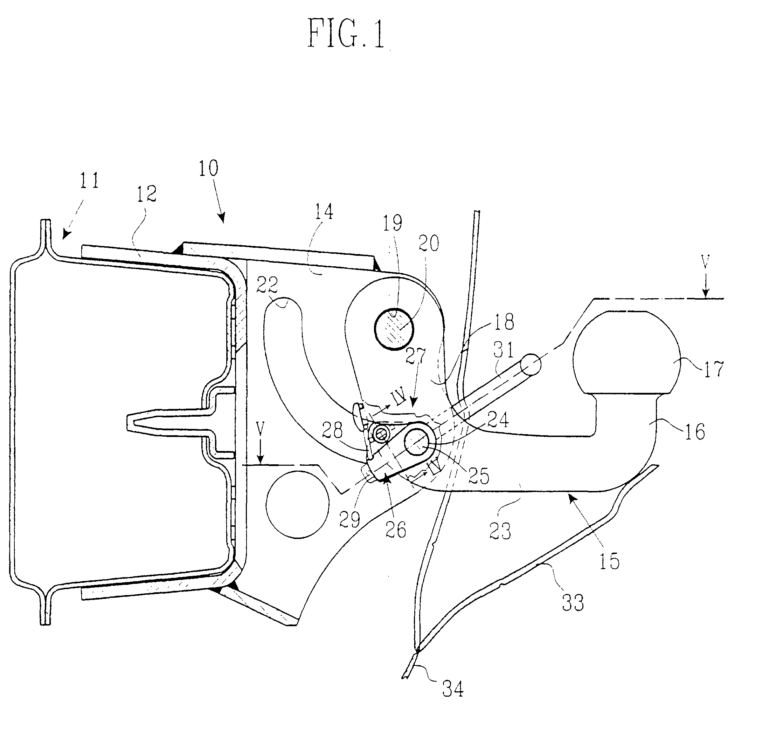

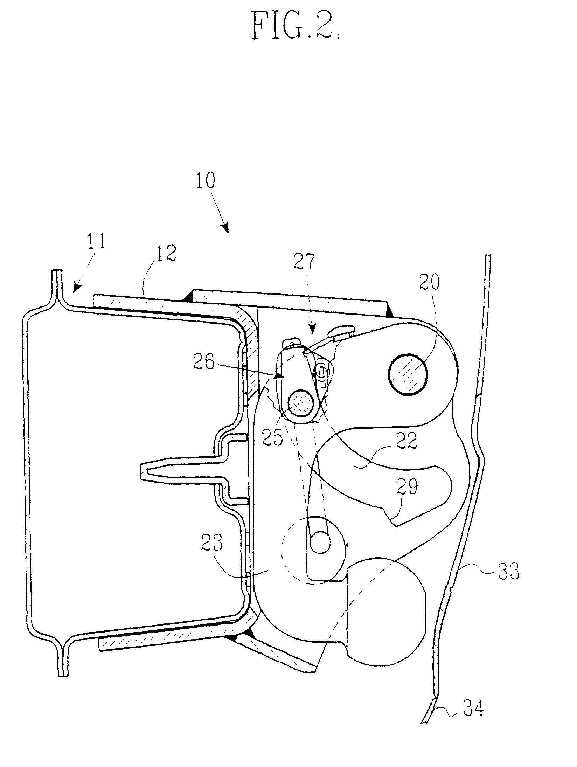

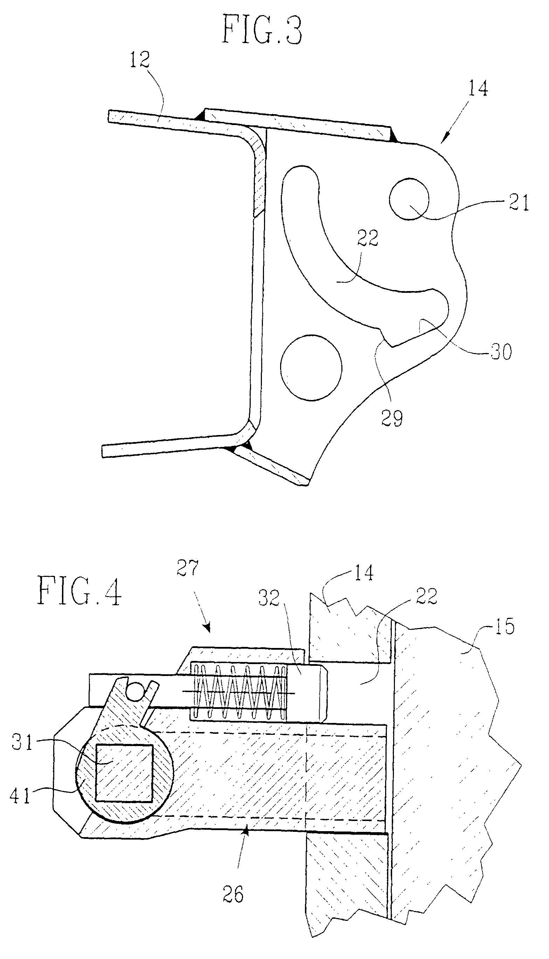

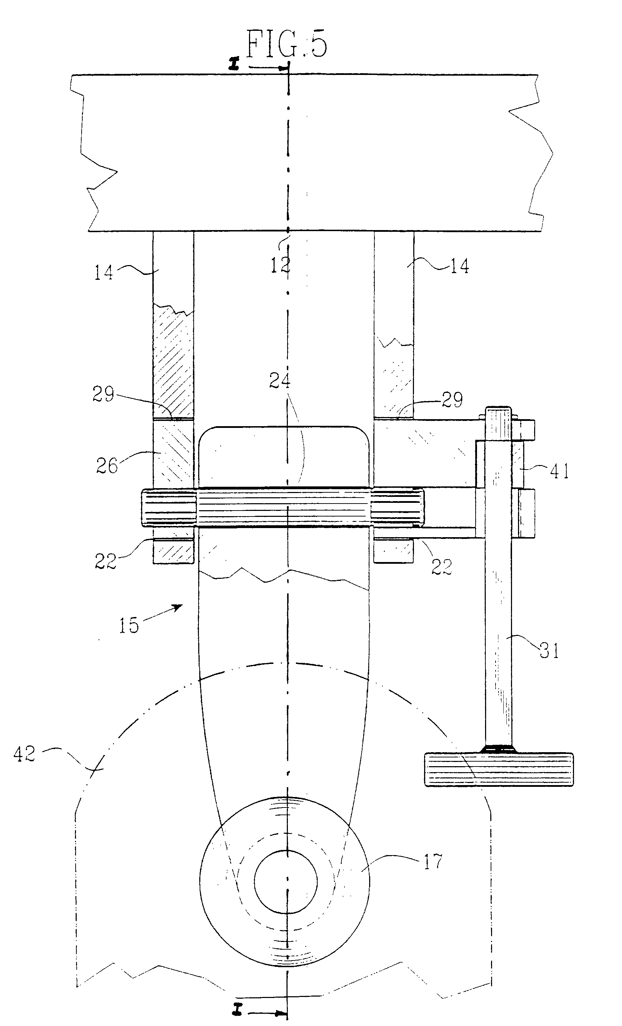

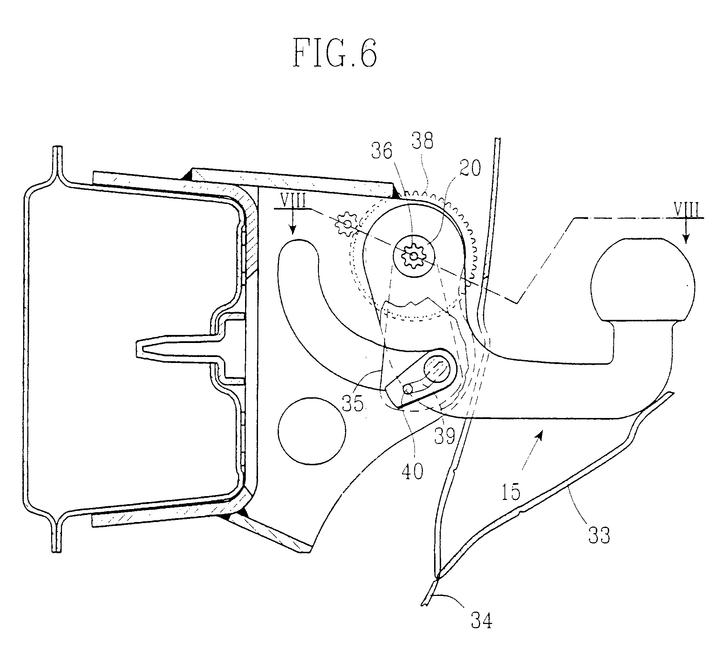

The embodiment shown in figures 1-5 concerns a hitching means for manual operation. In the drawings 10 represents a buffer, consisting of a buffer beam 11, which can be a cross beam of the car body, and one buffer cover 13 surrounding the beam in a backward direction. At the buffer beam 11 is fastened a channel 12, on which are welded two draw attachments 14 at some distance from each other. and between these is pivotally arranged a hitch 15. This has the form of a channel. where the end of the first branch 16 of the channel is equipped with a hitch ball 17, while at the end of the second branch 18 is arranged a drilling 19 for a pivot axle 20, which, in turn, is mounted in drillings 21 in the tow attachments 14. The hitch is thus rotatable from one position retracted in the buffer to a position where the hitch ball is located outside the buffer, in which position the middle part 23 of the hitch is essentially horizontal.

For fixing the hitch in its retracted and extended position a locking device 27 is arranged at the hitch, which locking device includes a slot 22, which extends along a part of a circle, in each tow attachment 14, and where the centre of the circle coincides with the centre of the pivot axle 20. In the transition part between its second branch 18 and its middle part 23, the hitch 15 is provided with a drilling 24, whose centre coincides with the centre line of the slot 22, whereby the drilling 24 is a bearing for an axle spindle 25. On both ends of said axle spindle is fastened a barrier clasp 26, each one of which is at least partly located in its respective slot 22. The front end of the barrier clasp which is turned from the axle spindle 25 is pressed against the outer border of the slot by a spring 28 and will, when the hitch is folded out, snap into a cavity 30 provided with a locking surface 29 in the slot 22 and prevents the hitch from rotating around its pivot axle 20.

The locking function of the locking device 27 can be eliminated with the aid of an operating handle 31, with which one spring-actuated latch bolt 32 arranged at the barrier clasp 26 can be actuated; the latch bolt 32 blocks the movement of the barrier clasp in the position shown in figure 1. When the latch bolt 32 is lifted with a carrier 41 out of the slot 22 the barrier clasp is released , so that it can rotate out of the cavity 30 and totally into the slot 22. The hitch can thereby rotate into its retracted. inoperative position, in which the middle part 23 of the hitch will take an essentially vertical position. where the hitch will take minimum space vertically as well as in file depth and sideways.

The latch bolt 32, the barrier clasp 26 and the operating handle 31 are included in a safety system, which operates in such a way that if the locking device is not in its locking function, the tow-glove 42 of the trailer cannot be applied on the hitch ball 17. This has been achieved in the following way. When the barrier clasp 26 reaches the end position the spring actuated latch bolt can enter and lock the clasp in locking position. Only after this has occurred can the operating handle 31 be turned 90 degrees, whereafter it is possible to push it in and lock the hitch. Before the operating handle 31 has been turned and pushed in it is thus not possible to use the hitch, as the handle prevents the tow-glove 42 to be applied over the ball. The two barrier clasps 26, in which the axle spindle is applied, will, in the extended position of the hitch, lie against one lower, rounded end of the circular slot 22, in which position the hitch can take draw load and forces directed upwards while forces directed inwards, such as braking force from a trailer, and forces directed downwards are taken up by the locking surface 29.

In the buffer cover 13, which can be produced of a suitable plastic material, a lid 33 is arranged right ahead of the which can be opened around a hinge 34.

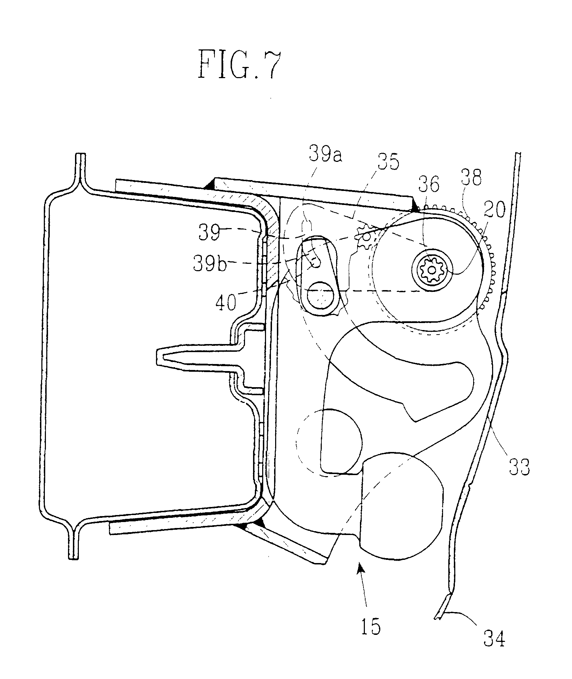

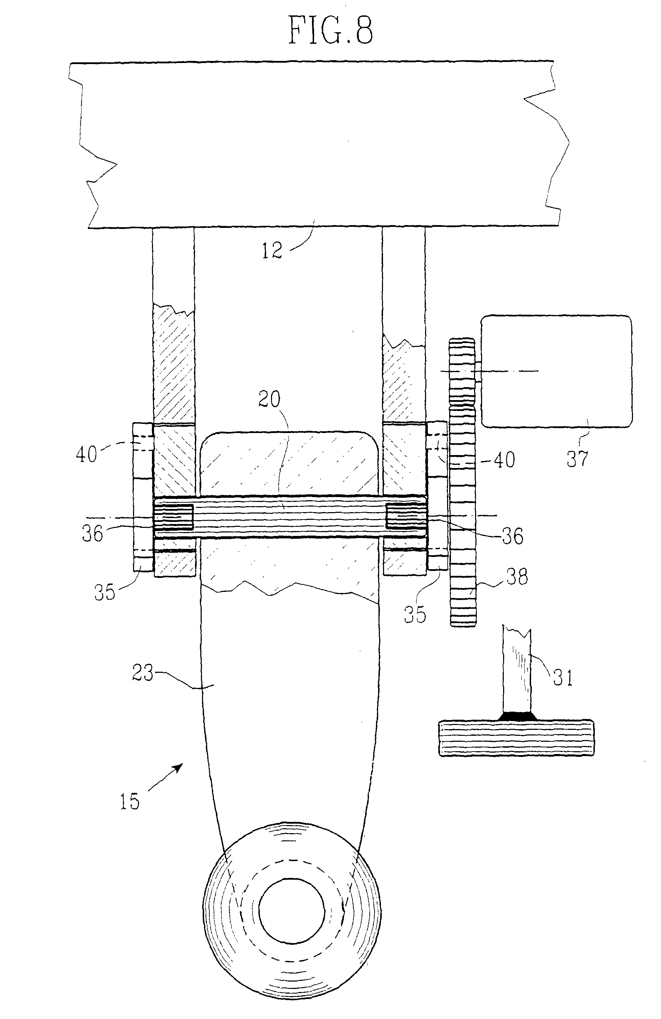

The embodiment shown in the figures 6 to 8 concerns a motor-driven hitch device where remote control of the hitch can occur electrically directly from the driving compartment.Constructively the electric driven version differs from the manual only in that on the outside of the two tow attachments 14 is arranged an operating lever 35, which is in turn fixedly connected to a spline-axle 36 extending through the pivot axle 20. An electric motor 37 with a gear 38 is arranged to turn the operating levers 35, which convey the hitch 15. In the operating levers is arranged an angled slot 39, comprising the slot parts 39a and 39b, which cooperates with a steering pin 40 arranged at the barrier clasp 26 in such a way, that the slot part 39a presses the barrier clasp down in the cavity 30 of the slot 22 and vice versa when the electric motor is reversed. One of the operating levers 35 cooperates in the end position of the lever with a micro switch (not shown) which breaks the current to the electric motor.

For safety purposes, the manually actuated operating handle with the locking device 27 can exist also in this embodiment to make it possible to operate the hitch in an emergency situation.

The invention is not limited to the embodiments shown and described above; variations are possible if remaining within the scope of the invention as defined by the appended claims. The embodiments describe double tow attachments, barrier clasps etc. but it is of course also possible that these elements are single if secure strength can be guaranteed.

### LIST OF REFERENCE NUMBERS

- 10: buffer
- 11: buffer beam
- 12: channel
- 13: buffer cover
- 14: tow attachment
- 15: hitch
- 16: 1st branch
- 17: hitch ball
- 18: 2nd branch
- 19: drilling
- 20: pivot axle
- 21: drilling
- 22: slot
- 23: middle part
- 24: drilling
- 25: axle spindle
- 26: barrier clasp
- 27: locking device
- 28: spring
- 29: locking surface
- 30: cavity
- 31: operating handle
- 32: latch bolt
- 33: lid
- 34: hinge
- 35: operating lever
- 36: spline-axle
- 37: electric motor
- 38: gear
- 39: angled slot
- 39a: slot part
- 39b: slot part
- 40: steering pin
- 41: carrier
- 42: tow-glove

## Claims

1. A hitching means for vehicles of the type comprising one hitch (15) pivotally attached at the buffer beam (11,12), said hitch (15) being pivotable from one in the buffer (10) retracted inoperative end position retracted in the buffer (10) to an operative end position located partly outside the buffer extended, whereby
the hitch (15) is channel-shaped. with a hitch ball arranged at a first branch end of the channel and with a pivot axle (20) at its other branch end;
the pivot axle (20) is mounted essentially horizontally in tow attachments (14) in the buffer beam (11,12), so that the middle part (23) of the hitch in retracted position is located essentially vertically and in extended position essentially horizontally;
a locking device (22,25,26,27,29) is arranged for locking the hitch (15) in its both end positions;
the locking device comprises a locking part (26), which is connected with the hitch within a transition part between the second branch (18) of the hitch and its middle part (23), **characterized in that**
said locking part (26) is arranged to be conveyed by said transition part when the hitch rotates from the retracted inoperative end position to the extended operative end position and **in that** the locking part in the extended position of the hitch is in engagement with the locking device, so that occurring load and force stresses are taken up in said transition part.

2. A hitching means according to claim 1,
**characterized in**
**that** the locking device is one at the hitch (15) pivotally mounted spring-actuated barrier clasp (26), which is arranged to cooperate with at least one slot (22) arranged in said attachments (14), said slot (22) extending along a part of a circle and being concentrical with the pivot axle (20), and in
**that** in the slot (22) is arranged a locking surface (29) for cooperation with the barrier clasp (26) in the extended position of the hitch (15).

3. A hitching means according to claim 2,
**characterized in**
**that** the barrier clasp (26) against the actuation of a spring (28) is pivotable with the aid of an operating handle (31) from a locked position to a position in which the barrier clasp (26) is free from the locking surface (29) and movable in the slot (22).

4. A hitching means according to claim 3,
**characterized in**
**that** the barrier clasp (26) is provided with a spring-actuated latch bolt (32), which is arranged to lock the barrier clasp (26) in at least one of its end positions in the slot (22), and which latch bolt is actuatable by said operating handle (31).

5. A hitching means according to claim 4,
**characterized in**
**that** the operating handle (31) in the locking position of the latch bolt (32) is turnable from one position, in which it prevents the application of a tow-glove (42) on the hitch ball (17), to a position in which it allows free access to the hitch ball.

6. A hitching means according to claim 2,
**characterized in**
**that** the locking surface (29) is located outside and below the circular path of the slot (22).

7. A hitching means according to claim 1,
**characterized in**
**that** on the pivot axle (20) is pivotably mounted at least one operating lever (35) arranged on the outside of the attachment (14), said lever (35) being connected to a driving device (37) for transmission of power for pivoting of the hitch, and in
**that** connecting means (39,40) are arranged between the operating lever (35) and the barrier clasp (26), which connecting means are arranged to, in one direction of rotation of the driving device, keep the barrier clasp in engagement with one locking surface (29) arranged (29) at the slot and when reversing the driving device disengage the barrier clasp from its locking position.

## Patentansprüche

1. Kuppeleinrichtung für Fahrzeuge der Art, die eine Kupplung (15) aufweisen, die schwenkbar am Pufferbalken (11, 12) angebracht ist, wobei die Kupplung (15) von einer inaktiven, in den Puffer (10) zurückgezogenen Endstellung, in der sie in den Puffer (10) zurückgezogen ist, in eine sich zum Teil außerhalb des Puffers (10) erstreckende aktive Endstellung schwenkbar ist,
wobei
die Kupplung (15) kanalförmig ist, wobei eine Kupplungskugel an einem ersten Verzweigungsende des Kanals und eine Schwenkachse (20) an seinem anderen Verzweigungsende angeordnet ist;
die Schwenkachse (20) im Wesentlichen horizontal in Zugbefestigungen (14) im Pufferbalken (11, 12) so angebracht ist, dass der mittlere Teil (23) der Kupplung in der zurückgezogenen Stellung im Wesentlichen vertikal und in der ausgefahrenen Stellung im Wesentlichen horizontal angeordnet ist;
eine Verriegelungsvorrichtung (22, 25, 26, 27, 29) zum Verriegeln der Kupplung (15) in deren beiden Endstellungen vorgesehen ist;
die Verriegelungsvorrichtung ein Verriegelungsteil (26) aufweist, das in einem Übergangsteil zwischen der zweiten Verzweigung (18) der Kupplung und deren Mittelteil (23) mit der Kupplung verbunden ist,
**dadurch gekennzeichnet, dass**
das Verriegelungsteil (26) so angeordnet ist, dass es von dem Übergangsteil mitgenommen wird, wenn die Kupplung aus der zurückgezogenen inaktiven Endstellung in die ausgefahrene aktive Endstellung schwenkt, und dass
sich das Verriegelungsteil in der ausgefahrenen Stellung der Kupplung in Eingriff mit der Verriegelungsvorrichtung befindet, so dass auftretende Last- und Kraftbelastungen von dem Übergangsteil aufgenommen werden.

2. Kuppeleinrichtung nach Anspruch 1,
**dadurch gekennzeichnet, dass**
die Verriegelungsvorrichtung eine schwenkbar an der Kupplung (15) angebrachte, federbetriebene Sperrklammer (26) ist, die so angeordnet ist, dass sie mit mindestens einem in den Befestigungseinrichtungen (14) angebrachten Schlitz (22) zusammenwirkt, wobei sich dieser Schlitz (22) entlang einem konzentrisch zur Schwenkachse (20) angeordneten Teilkreis erstreckt, und dass
in dem Schlitz (22) eine Verriegelungsfläche (29) für das Zusammenwirken mit der Sperrklammer (26) in der ausgefahrenen Stellung der Kupplung (15) angeordnet ist.

3. Kuppeleinrichtung nach Anspruch 2,
**dadurch gekennzeichnet, dass**
die Sperrklammer (26) gegen den Betätigungsdruck einer Feder (28) mit Hilfe eines Bediengriffs (31) von einer verriegelten Stellung in eine Stellung schwenkbar ist, in der die Sperrklammer (26) von der Verriegelungsfläche (29) gelöst und in dem Schlitz (22) bewegbar ist.

4. Kuppeleinrichtung nach Anspruch 3,
**dadurch gekennzeichnet, dass**
die Sperrklammer (26) mit einem federbetriebenen Klinkenbolzen (32) versehen ist, der so angeordnet ist, dass er die Sperrklammer (26) in mindestens einer ihrer Endstellungen in dem Schlitz (22) verriegelt, wobei der Klinkenbolzen mittels des Bediengriffs (31) zu betätigen ist.

5. Kuppeleinrichtung nach Anspruch 4,
**dadurch gekennzeichnet, dass**
der Bediengriff (31) in der verriegelten Stellung des Klinkenbolzens (32) von einer Stellung, in der er das Anbringen einer Zughülse (42) an der Kupplungskugel (17) verhindert, in eine Stellung drehbar ist, in der er freien Zugang zur Kupplungskugel gewährt.

6. Kuppeleinrichtung nach Anspruch 2,
**dadurch gekennzeichnet, dass**
die Verriegelungsfläche (29) außerhalb und unterhalb des kreisförmigen Weges des Schlitzes (22) angeordnet ist.

7. Kuppeleinrichtung nach Anspruch 1,
**dadurch gekennzeichnet, dass**
auf der Schwenkachse (20) mindestens ein Bedienhebel (35) schwenkbar angebracht ist, der an der Außenseite der Befestigungseinrichtung (14) angeordnet ist, wobei der Hebel (35) mit einer Mitnahmevorrichtung (37) für das Übertragen von Kraft zum Schwenken der Kupplung verbunden ist, und dass
Verbindungsmittel (39, 40) zwischen dem Bedienhebel (35) und der Verriegelungsklammer (26) so angeordnet sind, dass sie in einer Drehrichtung der Mitnahmevorrichtung die Verriegelungsklammer in Eingriff mit einer an dem Schlitz angeordneten Verriegelungsfläche (29) halten und die Verriegelungsklammer aus ihrer Verriegelungsstellung lösen, wenn die Richtung der Mitnahmevorrichtung umgekehrt wird.

## Revendications

1. Dispositif d'attelage pour véhicule du type comprenant un crochet d'attelage (15) fixé de manière pivotante à la traverse d'attelage (11, 12), ledit crochet d'attelage (15) pouvant pivoter depuis une position terminale inopérante rétractée dans le tampon (10) jusqu'à une position terminale opérationnelle avancée située partiellement à l'extérieur du tampon, dans lequel :
le crochet d'attelage (15) est conformé en U, avec une boule d'attelage disposée sur une extrémité d'une première branche du U et avec un axe de pivot (20) à l'extrémité de son autre branche ;
l'axe de pivot (20) est monté essentiellement horizontalement dans des fixations de remorquage (14) dans la traverse d'attelage (11, 12), de telle sorte que la partie médiane (23) du crochet d'attelage dans la position rétractée soit située essentiellement verticalement et, dans la position avancée, essentiellement horizontalement ;
un dispositif de verrouillage (22, 25, 26, 27, 29) est prévu pour verrouiller le crochet d'attelage (15) dans ses deux positions terminales ;
le dispositif de verrouillage comprend une pièce de verrouillage (26) qui est reliée au crochet d'attelage dans une partie de transition entre la deuxième branche (18) du crochet d'attelage et sa partie médiane (23),
***caractérisé en ce que*** ladite pièce de verrouillage (26) est prévue pour être déplacée par ladite partie de transition lorsque le crochet d'attelage tourne de la position terminale inopérante rétractée jusqu'à la position terminale opérationnelle avancée et ***en ce que*** la pièce de verrouillage dans la position avancée du crochet d'attelage est en prise avec le dispositif de verrouillage, de telle sorte que les contraintes de charge et de force soient absorbées dans ladite partie de transition.

2. Dispositif d'attelage selon la revendication 1,
***caractérisé en ce que*** le dispositif de verrouillage est un fermoir (26) à ressort, monté pivotant sur le crochet d'attelage (15), qui est agencé pour coopérer avec au moins une encoche (22) ménagée dans lesdites fixations (14), ladite encoche (22) s'étendant le long d'une portion de cercle et étant concentrique de l'axe de pivot (20), et ***en ce que*** dans l'encoche (22) est ménagée une surface de verrouillage (29) pour une coopération avec le fermoir (26) à ressort dans la position avancée du crochet d'attelage (15).

3. Dispositif d'attelage selon la revendication 2,
***caractérisé en ce que*** le fermoir (26), en opposition à l'action d'un ressort (28), peut pivoter avec l'aide d'une poignée de manoeuvre (31) d'une position verrouillée à une position dans laquelle le fermoir (26) est libéré de la surface de verrouillage (29) et mobile dans l'encoche (22).

4. Dispositif d'attelage selon la revendication 3,
***caractérisé en ce que*** le fermoir (26) est muni d'un péne (32) à ressort qui est agencé pour bloquer le fermoir (26) dans au moins une de ses positions terminales dans l'encoche (22), lequel pêne à ressort est actionnable avec ladite poignée de manoeuvre (31).

5. Dispositif d'attelage selon la revendication 4,
***caractérisé en ce que*** la poignée de manoeuvre (31), dans la position de verrouillage du pêne (32) à ressort, peut tourner d'une position dans laquelle elle empêche l'application d'un boîtier de remorquage (42) sur la boule d'attelage (17), jusqu'à une position dans laquelle est autorisé un libre accès à la boule d'attelage.

6. Dispositif d'attelage selon la revendication 2,
***caractérisé en ce que*** la surface de verrouillage (29) est située à l'extérieur et au-dessous du trajet circulaire de l'encoche (22).

7. Dispositif d'attelage selon la revendication 1,
***caractérisé en ce que*** sur l'axe de pivot (20) est monté pivotant au moins un levier de manoeuvre (35) disposé sur l'extérieur de la fixation (14), ledit levier (35) étant raccordé à un dispositif de commande (37) pour la transmission d'une force motrice pour le pivotement du crochet d'attelage, et ***en ce que*** des moyens de connexion (39, 40) sont disposés entre le levier de manoeuvre (35) et le fermoir (26), ces moyens de connexion étant disposés de manière à, dans une direction de rotation du dispositif de commande, maintenir le fermoir en engagement avec une surface de verrouillage (29) ménagée sur l'encoche et, lorsqu'on inverse le mouvement, le dispositif de commande dégage le fermoir de sa position de verrouillage.
